# EUROPEAN PATENT APPLICATION

(11) **EP 0 777 228 A2**
(43) Date of publication of application: **04.06.1997**
(21) Application number: 96308532.9
(22) Date of filing: 26.11.1996
(51) Int. Cl.: G11B 27/00, G06F 3/06

(54) **Data storage/transfer apparatus and method**

(30) Priority: 01.12.1995 US 566245
(71) Applicant: SYMBIOS LOGIC INC., Fort Collins, Colorado 80525 (US)
(72) Inventor: DuLac, Keith B., Derby, KS 67037 (US); Freeman, Paul M., West Des moines, IA 50265 (US)
(74) Representative: Gill, David Alan

(57) **Abstract**

The invention provides for a method and apparatus for transferring or playing back data, and in particular video data, located on a first storage device (10) to a user. The first storage device (10) has a delay that occurs before beginning to transfer the video to the user. A portion of the video is preloaded into a second storage device (62) that has a delay in beginning to transfer the video to the user that is less than the delay associated with the first storage device (60). When a request for the video is received, the portion of the video located in the second storage device (62) is transferred to the user while at the same time, the remaining portion of the video located on the first storage device (60) is transferred to the second storage device (62) for transfer to the user, wherein the delay associated with the first device is minimized.

## Description

The present invention relates generally to a data processing system and in particular, but not exclusively, to a method and apparatus for transferring digital video data. Still more particularly, the present invention relates to a method and apparatus for reducing start up latencies associated with the transfer of digital video data.

With improvements in compression technologies and mass storage systems, applications such as video-on-demand (VOD), video editing, interactive games, home shopping, and other multimedia applications have been developed. Video-on-demand services may include, for example, movies, sporting events, textural information, educational programs, and arts programs.

A "multimedia application" is an application that uses different forms of communication in one application. For example, information can be displayed on a data processing system using voice, text, and video simultaneously. A multimedia data processing system allows text, graphics, and audio to be displayed simultaneously. These types of multimedia applications are referred to collectively as "video", and it should be understood that such video generally includes both video and audio portions, although, in some instances, a video may only include an image portion as in textual information, or only an audio portion, as for example music.

Advances in network bandwidths, audio and video compression algorithms, VLSI, complexities, and disk storage densities have recently made it technologically and economically feasible to store and transmit video data in a digital format, rather than in an analog format. The representation of video data in digital form makes it possible to use digital compression algorithms, such as MPEG-1 and MPEG-2, on the video data, thus reducing the storage and transmission bandwidth requirements. The compression rates achieved through these algorithms is enough to increase, by an order of magnitude, the number of video programs which can be transmitted across a given network bandwidth, when compared to transmitting the same video data in an analog format. This increased transmission capacity has stimulated much commercial interest in providing interactive video on demand services to the home. Such services allow a subscriber to select a video, such as a movie or television program, for viewing from a menu of available movies and programs stored at a video server. The selected movie or program is then transmitted across a dedicated network connection from the video server to the appropriate subscriber or user.

Even with the use of compression techniques, a reasonably sized video server may be required to store an enormous amount of video data. For example, at a typical compression rate of 3 megabits per second, a two hour movie requires 2.7 gigabytes of storage. Thus, a video server which provides access to 500 such digitized movies would require over one terabyte of storage capacity. A video server would typically provide this storage capacity through a storage hierarchy of semiconductor, disk, and tape memory.

In such an architecture, a disk subsystem would hold a selection of frequently requested movies, while a tape subsystem would hold the complete set of movies available at the video server. The semiconductor memory is typically used to store a small portion or segment (in time) of each video which is currently being viewed by a user. The data would be transferred from disk to semiconductor memory in pieces and from semiconductor memory to the network at the required bit-rate for each video program.

In such a system, when a user selects a movie that is not available on disk, it would be necessary for the video server to load the movie from tape to disk before playback could begin. A typical tape subsystem can transfer the movie to the disk subsystem at a faster rate than is required for playback of the movie across the network. Thus, playback of a movie from the disk subsystem can begin as soon as a small portion of the movie has been loaded from tape to disk, with the remainder of the movie transfer to disk occurring in parallel with playback of the movie from the disk subsystem to the network via buffers in the semiconductor memory. The time, however, required to load the tape containing the selected movie into a tape drive (typically seconds or tens of seconds when performed via robotic tape jukeboxes) and transfer the beginning of the movie to the disk subsystem greatly increases the response time as observed by the user. This increased response time is undesirable.

Therefore, the invention seeks to provide for a digital data transfer method and apparatus having advantages over known such methods and apparatus and which may allow a video server to be implemented using a hierarchical system for data storage, while eliminating start up latencies typically associated with accessing a video data which is not located in the fastest tier of the storage hierarchy.

The invention can be realised in a method in a data processing system for transmitting a video stored on a first storage unit, wherein a delay associated with the first storage unit occurs prior to beginning transmission of the video to a user. The method can comprise storing a portion of the video on a second storage unit prior to receiving a request for the video from a requester, wherein a delay associated with the second storage unit in beginning to transmit the portion of the video associated with the second storage unit is less than the delay associated with the first storage unit. receiving the request for the video from a requester, and transmitting the portion of the video stored on the second storage unit to the requester while transferring another portion of the video to the second storage unit in response to receiving the request.

Preferably, the storing step comprises storing a portion of video having a length at least equal to, or greater than, the delay associated with the first storage unit.

Further, there can be provided a method in a data processing system for transferring a video stored on a magnetic tape in a tape system to a requester and including storing a segment of the video in a memory of the data processing system, wherein the segment has a length at least equal to a delay associated with the tape system beginning to transfer the video to the memory, and transferring the segment of the video in the memory to the requester while beginning to transfer another segment of the video to the memory.

The step of transferring the remaining segment of the video can comprise transferring the remaining segment of the video from the magnetic tape system to a hard disk system and from the hard disk system to the memory. Also, a second video can be stored on a disk subsystem and the method can include storing a segment of the second video in the memory of the data processing system, wherein the segment of the second video has a length at least equal to the delay associated with the disk subsystem beginning to transfer the video to the memory, and transferring the segment of the video in the memory to the requester while beginning to transfer the remaining segment of the video in the disk subsystem to the memory.

The invention may also provide for a data processing system for transmitting a video stored on a first storage unit, wherein a delay from the storage unit occurs prior to beginning transmission of the video to a requester, storage means for storing a portion of the video on a second storage unit, wherein a delay associated with the second storage unit and beginning to transmit the portion of the video associated with the second storage unit is less than the delay associated with the first storage unit and transmitting means for transmitting the portion of the video on the second storage unit while transmitting another portion of the video to the second storage unit.

Preferably, the first storage unit comprises a tape drive.

Advantageously, the second storage unit comprises a hard disk drive.

Further, the first storage unit may comprise a tape library, and the second storage unit may comprise a disk subsystem.

Alternatively, the invention can provide for a data processing system for transferring a video stored on a magnetic tape to a requester and comprising storage means for storing a segment of the video in a memory of the data processing system prior to receiving a request for the video from the requester, wherein the segment has a length at least equal to a delay associated with the magnetic tape beginning to transfer the video to the memory, reception means for receiving the requests for the video from the requester, and transfer means for transferring the segment of the video in the memory to the requester while beginning to transfer another segment of the video to the memory. The transfer means may comprise means for transferring the remaining segment of the video from the magnetic tape to a hard disk system and from the hard disk system to the memory.

Further, a second video may be stored on a disk subsystem and the apparatus may comprise storage means for storing a segment of the second video in the memory of the data processing system, wherein the segment of the second video has a length at least equal to the delay associated with the disk subsystem beginning to transfer the video to the memory, and transfer means for transferring the segment of the video in the memory to the requester while beginning to transfer another segment of the video in the disk subsystem to the memory.

A data processing system may also be provided and a tape library, wherein a plurality of videos is stored on the tape library and a delay occurs in beginning to transfer the video from the tape library to a requester memory means, initialization means for storing a portion of each video located on the tape library in the memory, wherein each portion has a length in time at least equal to the delay associated with the tape library, and transfer means, responsive to a request for a video, for transferring the requested video to the requester and in which the transfer means can include initial transfer means for transferring the portion of the requested video in memory to the requester, loading means for loading another portion of the requested video into the memory, and transfer means for transferring another portion of the requested video to the requester.

Advantageously, the loading means may comprise means for loading the requested video from the tape library to a hard disk system and from the hard disk system to the memory.

The data processing system may further comprise a disk subsystem, wherein a video is stored on the disk subsystem and wherein a delay occurs in beginning to transfer the video from the disk subsystem to the requester initialization means for transferring the portion of the requested video from the disk subsystem in memory to the requester, loading means for loading a third portion of the requested video, from the disk subsystem into the memory and transfer means for transferring the third portion of the requested video to the requester.

In another embodiment, the invention can provide a storage device readable by a data processing system and encoding data processing system executable instructions for transferring a video stored on a magnetic tape from the data processing system to a user comprising first instruction means for storing a portion of the video in a memory of the data processing system prior to receiving a request for the video, wherein the portion has a length at least equal to a delay associated with the magnetic tape beginning to transfer the video to the memory, second instruction means for receiving a request for the video, and third instruction means for transferring the portion of the video in the memory to the user while beginning to transfer another portion of the video to the memory, wherein the means are activated when the storage device is connected to and accessed by the data processing system.

The storage device may comprise a hard disk drive, a read only memory, a floppy diskette, or a random access memory.

According to one aspect of the present invention there is provided apparatus for storing data to be transferred in response to a request received by the apparatus for the transfer of that data, comprising main storage means for storing said data and which exhibits a delay before the transfer can occur in response to the receipt of the request and characterized by a further storage means exhibiting a delay which is less than the delay exhibited by the main storage means and which is arranged for storing a portion of said data, and wherein the further storage means is arranged for transferring the portion of said data upon receipt of said request whilst the transfer of the data from the main storage means is initiated in response to the request.

In accordance with another aspect of the present invention, there is provided a method of storing data to be transferred in response to a request for transfer therefrom, comprising the steps of storing said data on main storage means which exhibits a delay before transfer can occur in response to said request and characterized by the step of transferring a portion of said stored data to further storage means which exhibits the delay less than the delay exhibited by the main storage means, and transferring the portion from the further storage means in response to said request while the transfer of the data stored in the main storage means is initiated in response to the request and transferred by way of the further storage means.

The present invention thus advantageously provides a method and apparatus for transferring or playing back data, such as digital video data, located on a first storage device (e.g. magnetic tape) to a user. The first storage device has a delay that occurs before beginning to transfer the video to the user. Before a request for the video is received, a portion or segment of the video is preloaded into a second storage device (e.g. magnetic disk) that has a delay in beginning to transfer the video to the user that is less than the delay associated with the first storage device. When a request for the video is received, the portion of the video located in the second storage device is transferred to the user while at the same time, the remaining portion of the video located on the first storage device is transferred to the second storage device for transfer to the user, wherein the delay associated with the first device is minimized.

The invention is described further hereinafter, by way of example only, with reference to the accompanying drawings in which:
Fig. 1 is a distributed data processing system for providing video in accordance with a preferred embodiment of the present invention;
Fig. 2 is a diagram of a data processing system illustrated according to the present invention;
Fig. 3 is a diagram illustrating the flow of video data according to the present invention;
Fig. 4 is a flowchart of a process for preloading movies in a video server according to an embodiment of the present invention;
Fig. 5 is a flowchart of a process for determining the size of the portion of the movie to be loaded into memory according to an embodiment of the present invention; and
Fig. 6 is a flowchart of a process for transferring a movie according to an embodiment of the present invention.

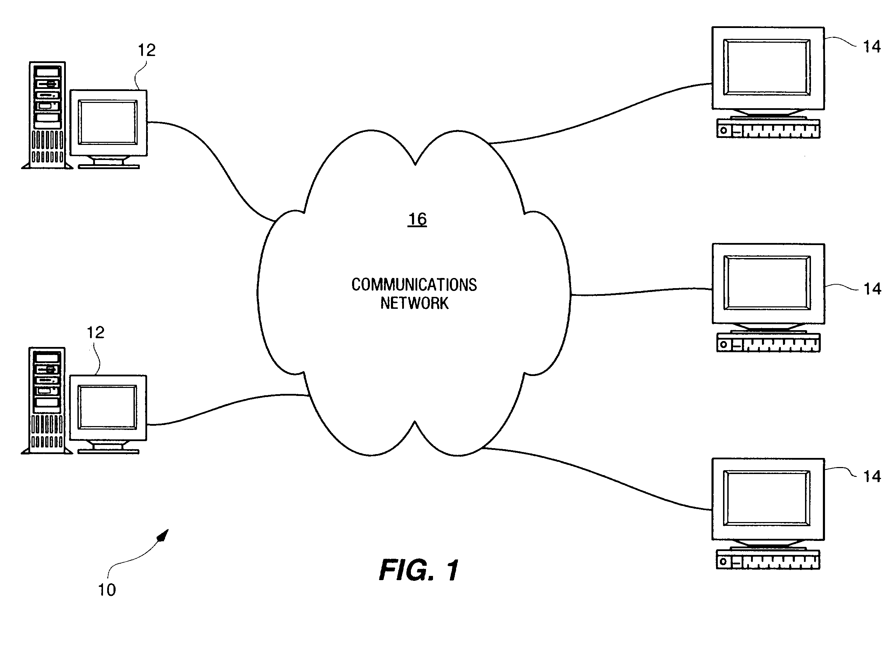

With reference to Fig. 1, a distributed data processing system 10 for providing video is depicted in accordance with a preferred embodiment of the present invention. Distributed data processing system 10 includes one or more data processing systems 12, user systems 14 distributed over a large geographical area, and a communications network 16. Generally, videos are transferred from data processing system 12 to user systems 14 over communications network 16. In addition, videos may be transferred between data processing systems 12.

The physical medium employed in communications network 16 for communicating between data processing system 12 and user system 14 can be, for example, a twisted pair of wires, a coaxial cable, a fibre optic cable, a microwave link, or a satellite link. The continuous physical path used for communicating is called a circuit. The circuit includes a relatively small bandwidth "bi-directional" channel for communicating control signals and a relatively large bandwidth "downstream" channel for communicating video data. This circuit may include additional channels, for example, a medium bandwidth channel allocated for two-way communications such as telephone service may be employed.

In the depicted example, distributed data processing system 10 is a broadband communications system including Synchronized Optical Network (SONET), Asynchronous Transfer Mode (ATM), and Intelligent Networks (INs). Services available across distributed data processing system 10 may include video voice mail; interactive video phone a video based telephone conversation; data and video transfer, such as, accessing of information from remote text and video libraries across wide geographic areas; and VOD. In addition to these, numerous other multimedia applications may be provided by broadband communications in distributed data processing system 10.

To support audio and video, video servers in distributed data processing system 10 must support storage of vast amounts of data. For example, 10 minutes of uncompressed full motion video typically consumes 22 gigabytes of memory. Presently available compression standards, such as Joint Photographic Experts Group (JPEG) and Motion Picture Experts Group (MPEG) are employed to compress data. More information on communication networks involving broadband communications networks and architecture along with data transfer standards can be found in Kumar, Broadband Communications: A Professional's Guide To ATM, Frame Relay, SMDS, SONET, and BISDN, McGraw-Hill, Inc. (1995).

User systems 14 comprise an interface/controller box connected to the network and a viewing device such as a monitor or a television in the depicted example. Alternatively, the configuration of user systems 14 may be in the form of work stations.

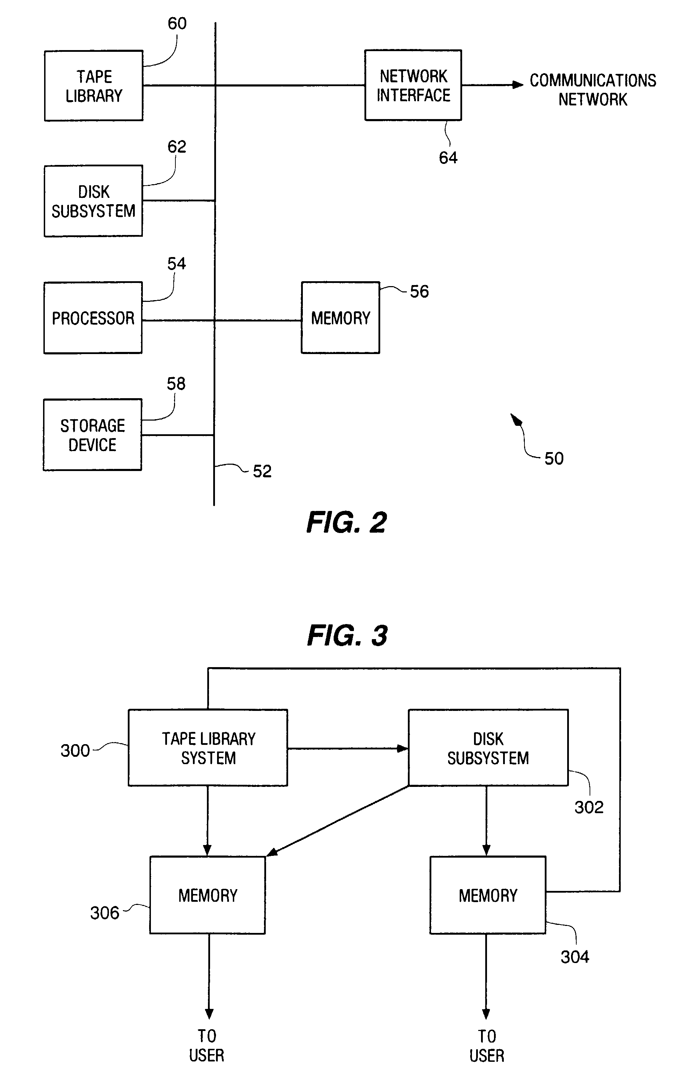

With reference now to Fig. 2, a diagram of a data processing system is illustrated according to an embodiment of the present invention. Data processing system 12 in the depicted example is a video server 50 that contains a system bus 52, interconnecting a number of components. In particular, processor 54, memory 56, and storage device 58 are in communication with each other via system bus 52 inside video server 50. Programs supporting system and network management are executed by processor 54. While any appropriate processor can be used for processor 54, the Pentium microprocessor, which is sold by Intel Corporation and the Power PC 620, available from International Business Machines Corporation and Motorola, Inc. are examples of suitable processors. "Pentium" is a trademark of the Intel Corporation and "PowerPC" is a trademark of International Business Machines Corporation. Additionally, business support databases may be found on storage device 58. These databases are employed to track incoming requests for videos and statistical data, such as peak request times for videos, frequency of requests for videos, and identification of users requesting videos. Video server 50 is connected to a communications bus or network interface 64 for asynchronous transfer mode (ATM).

Video server 50 also includes a tape library 60 and a disk subsystem 62 in which videos are stored. In the depicted example, these videos are in the form of movies. Tape library 60 contains all available movies while disk subsystem 62 contains a complete set of the most popular movies plus an initial portion of all available movies.

A typical tape library used for a video server may consist of one or more robotic tape jukeboxes, each with a collection of magnetic tapes which store digitized and compressed movies. In addition, the video server would contain a database to record the assignment of each movie to a specific magnetic tape within a specific tape jukebox. Each jukebox may store several tens or hundreds of tapes, with each tape typically storing a single movie. Additionally, a typical jukebox may contain several tape drives. When a request to playback a specific movie is received by the video server, a database look-up operation is performed to map the requested movie title to the specific tape/jukebox combination on which it is stored. If there is a tape drive which is not currently in use in the jukebox which contains the requested movie, the jukebox is commanded to load the specific tape into the available tape drive and begin transfer of the movie from the tape to the disk subsystem of the video server.

Memory 56 also serves as a memory buffer containing the current time window for all movies being played. In the depicted example, each initial portion or segment of a movie stored on disk subsystem 62 has a length in time that is equal to at least the latency or delay time associated with beginning to transfer the movie from tape library 60 to disk subsystem 62 such that the movie can be transferred to the user via network interface 64.

A typical disk subsystem for a video server would consist of one or more disk arrays. Each disk array would typically contain several (e.g. 5 to 20) disk drives, and movies would be stored in a striped fashion across the disk drives, wherein successive segments of each movie would be stored in a round-robin fashion among the drives in the disk array. The disk array subsystem would also include a software layer which presents the collection of disk drives as a single disk drive with very high bandwidth to the video server. In addition, the disk array software layer may store some redundant information for each movie on the disk array. The redundant information is typically stored such that the disk array can continue to operate without loss of data when a drive within the disk array fails. Thus, the disk array software layer allows a collection of "N" independent disk drives to appear as a single, highly reliable, disk drive with nearly "N" times the transfer bandwidth of a single drive.

A movie located in tape library 60 is transferred to disk subsystem 62 and then into the memory buffer configured in memory 56. From memory 56, the movie is sent to network interface 64 to be dispatched or transferred to the user across the communications network. In addition, an initial segment of each movie may be preloaded into memory 56 in which the preloaded segment of each movie has a length equal to at least the latency or delay involved with transferring the movie from either tape library 60 or disk subsystem 62 to memory 56 such that transmission of the movie to a user can begin. This type of preloading is performed to minimize any delay in playing back the movie to a user across the communications network.

According to an embodiment of the present invention, preloading may occur in different parts of the video server to minimize the delay associated with beginning the movie being stored on one particular type of storage device and beginning to transfer that movie through the data path in the video server to network interface 64 for dispatch or transmission to a user across communications network 16.

Specifically, video server 50 may be implemented using any suitable computer, such as the IBM PS/2 or an IBM RISC SYSTEM/6000 computer, both products of International Business Machines Corporation, located in Armonk, New York. "RISC SYSTEM/6000 is a trademark of International Business Machines Corporation. Additionally, tape library 60, according to the present invention, is connected to processor 54 by communications bus 52. Communications bus 52 also provides video server 50 a connection to communications network 16 in Fig. 1. Additionally, although the depicted embodiment illustrates the processes of the present invention using a tape library and a disk subsystem, the present invention may be applied to other types of storage devices, such as a single tape drive, a single hard disk, or an optical disk system.

In particular, the processes of the present invention may be applied to various types of storage units. As referred to hereafter, a "storage unit" may be a single storage device, multiple storage devices that are recognized by as a single storage device, or part of a device or a device that is recognized as a single device.

With reference now to Fig. 3, the flow of video data in a video server is depicted according to an embodiment of the present invention. Initial segments of each movie located in tape library 300 and disk subsystem 302 are preloaded into memory 304 prior to receiving requests for playback of the movie. When a request is received for a movie, the initial segment of the video located in memory 304 is immediately dispatched from the video server across the communications network. At the same time that the segment of the movie is being dispatched from memory 304, the next segment of the movie is being loaded into memory 306. If the video is located on disk subsystem 302, the movie is loaded directly into memory 306. If the movie is located in tape library 300, the movie may be either loaded directly into memory 306 or into disk subsystem 302 and then into memory 306 for dispatch to a user. This process occurs as the initial segment of the movie is dispatched to the user from memory 304. According to the present invention, memory 304 and memory 306 may be memory blocks within the same memory. Alternatively, memory 306 and memory 304 may be physically separate from each other.

In this manner, for those videos, which are not available on disk subsystem 302, the latency time, also called the "delay", required to load the beginning of the video from tape library 300 to disk subsystem 302 and to transfer the movie to a user is minimized. The latency is minimized by storing the initial segment of all movies available on the video server in disk subsystem 302 or in memory 304, while the remainder of some or all of the movies are stored in tape library 300. For example, if the worst case access time to load a movie on a tape in tape library 300 and begin transfer from tape to a disk in disk subsystem 302 or tape to memory 306 is 30 seconds, then the first 30 seconds of each movie could be pre-stored in disk subsystem 302 or in memory 304.

As a result, the playback of any movie can begin immediately from disk subsystem 302 or memory 304, depending on where the initial segment of the video is preloaded. If the complete movie is not available in disk subsystem 302 at the time the movie is selected, the remainder of the movie can be transferred from tape to disk in parallel with the dispatch of the start of the movie, and would thus be available at disk subsystem 302 by the time it was required for playback or dispatch to the user.

Thus, segments of all of the movies in tape library 300 may be loaded either into disk subsystem 302 or into memory 304, eliminating disk to memory transfer time from the response time as observed by a user.

Typically, traditional video servers store complete versions of the most popular movies on disk and complete versions of the less popular movies on tape. According to the present invention, when a movie which is available only on tape is selected for playback, latency incurred during the transfer of part or all of the movie from tape library 300 to disk subsystem 302 or memory 306 is eliminated because a segment of the selected movie has been preloaded into memory 304.

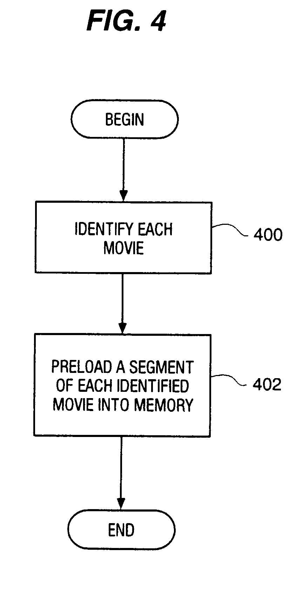

With reference now to Fig. 4, a flowchart of a process for preloading movies for a video server is depicted according to an embodiment of the present invention. The process begins by identifying each movie located within the video server (step 400). The process then preloads a segment of each identified movie into a memory (step 402) with the process terminating thereafter.

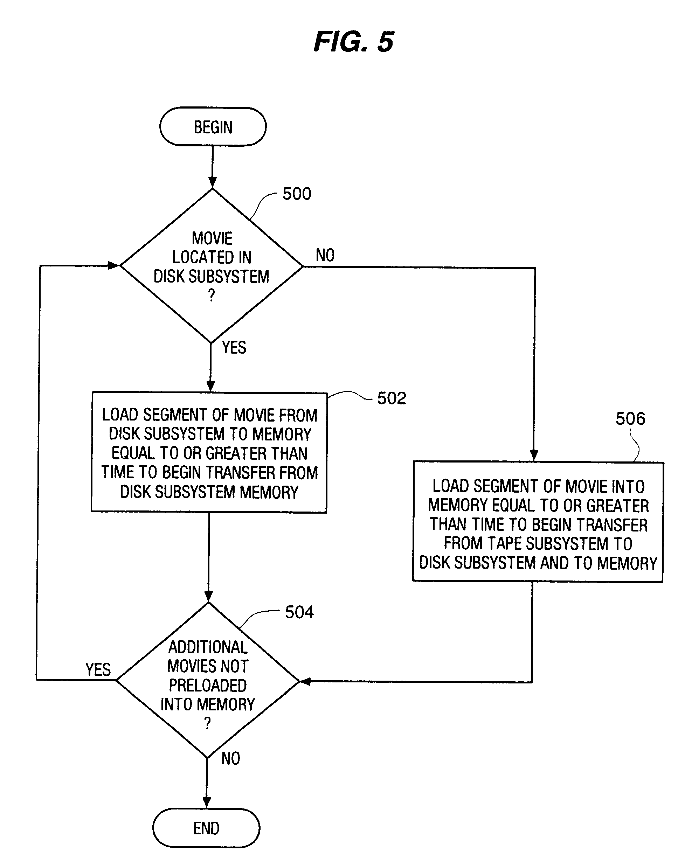

Turning next to Fig. 5, a flowchart of a process for determining the size of the segment of the movie to be loaded into memory is depicted according to an embodiment of the present invention. The process begins by determining whether the movie is located in part or in whole in the disk subsystem (step 500). If the movie is found on the disk subsystem, the process loads a segment of the movie from the disk subsystem to the memory that is equal to or greater than the amount of time that it takes to begin to transfer the movie from the disk subsystem to the memory (step 502).

The process then determines whether additional movies are present that have not been preloaded into the memory (step 504). If additional movies are present, the process returns to step 500. Otherwise, the process terminates. With reference again to step 500, if the movie is not located on the disk in part or in whole the process then preloads a segment of the movie into the memory that is equal to or greater than the time to begin to transfer part or all of the movie from the tape subsystem to the disk subsystem and then to the memory (step 506). The process then proceeds to step 504 as previously described. If the movie is to be transferred directly from the tape to the memory, then the segment of the movie loaded into the memory is equal to or greater than the amount of time needed to begin to transfer a part of the movie from the tape to the memory and begin transfer of the movie to the user.

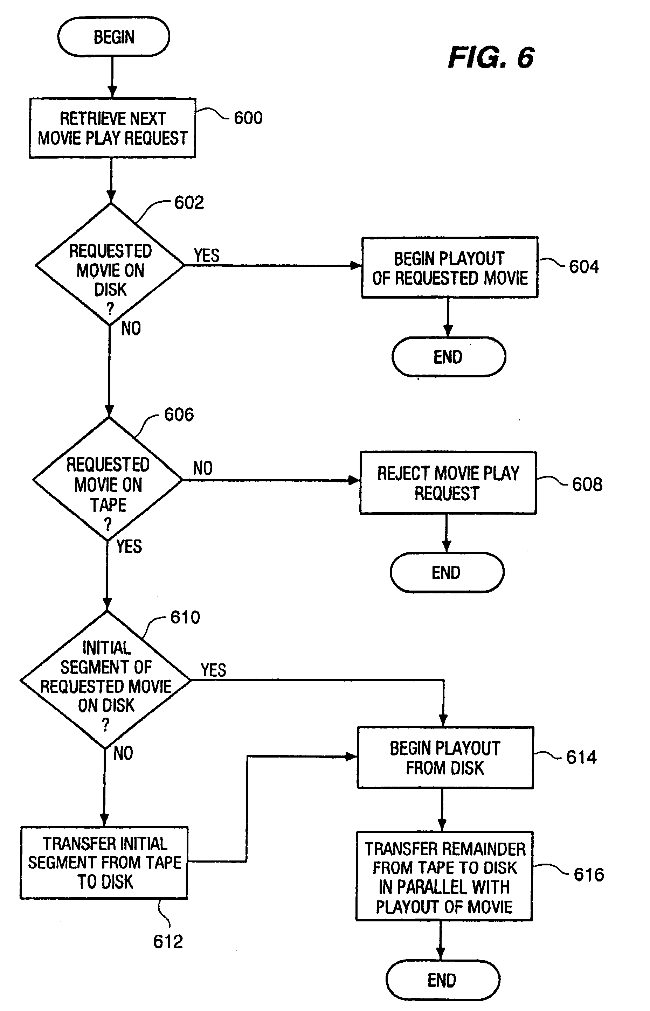

With reference now to Fig. 6, a flowchart of a process for transferring a movie is depicted according to an embodiment of the present invention. The process begins by retrieving the next movie play request (step 600). Thereafter, a determination is made as to whether the requested movie is located on the disk subsystem (step 602). If the requested movie is located on the disk subsystem, the process then begins transferring the requested movie to the user (step 604) with the process terminating thereafter. With reference again to step 602, if the requested movie is not located in the disk subsystem, the process then determines whether the requested movie is located in tape library (step 606). If the requested movie is not located in tape library, the process then rejects the movie play request (step 608) with the process terminating thereafter.

With reference again to step 606, if the requested movie is located in the tape library, the process then determines whether the initial segment of the requested movie is located in the disk subsystem (step 610). If the initial segment of the requested movie is not located in the disk subsystem, the process then transfers an initial segment of the movie from the tape library to the disk subsystem (step 612). The process begins transferring the movie from the disk subsystem to a memory for transfer to the user requesting the movie (step 614). The process then transfers the remainder of the movie from the tape library to the disk subsystem (step 616). With reference again to step 610, if the initial segment of the requested movie is on the disk library, the process proceeds directly to step 614 as previously described.

As a result, the present invention eliminates, or minimizes, the startup latencies or delays typically associated with accessing a video which is not stored in the fastest tier of a storage hierarchy including various storage media, such as magnetic tape, magnetic disk, and semiconductor memory. The method and apparatus of the present invention minimizes, or eliminates, the startup latency by preloading a portion of the video onto a storage device that has less startup delay than the storage device in which the video is located. The initial portion of the video has a length that is at least equal to the delay in time associated with the storage device in which the entire video is located. Thus, the present invention begins transferring the initial portion of the video from the first storage device (the faster storage device) while the video is transferred from the first storage device to the second one.

While the invention has been particularly shown and described with reference to a preferred embodiment, it will be understood by those skilled in the art that the invention is not restricted tot he details of the foregoing embodiments. For example, although the depicted example is directed towards movies, the processes of the present invention may be used with other types of videos.

## Claims

1. Apparatus (50) for storing data to be transferred in response to a request received by the apparatus for the transfer of that data, comprising main storage means for storing said data and which exhibits a delay before the transfer can occur in response to the receipt of the request and characterized by a further storage means exhibiting a delay which is less than the delay exhibited by the main storage means and which is arranged for storing a portion of said data, and wherein the further storage means is arranged for transferring the portion of said data upon receipt of said request whilst the transfer of the data from the main storage means is initiated in response to the request.

2. Apparatus as claimed in Claim 1, wherein the portion of data stored in the further storage means corresponds in length to at least the delay exhibited by the main storage means.

3. Apparatus as claimed in Claim 1 or 2, and including yet further storage means from which at least a portion of said data can be transferred in response to said request whilst data stored on said main storage means is transferred by way of either the further, or the yet further storage means.

4. Apparatus as claimed in Claim 3, wherein a portion of further data is arranged to be stored on the yet further storage means and wherein the portion of the further data stored on the yet further storage means is at least equal to the delay exhibited by the further storage means.

5. Apparatus as claimed in any one of the preceding Claims, wherein the main storage means comprises a tape library for storing a plurality of discrete data sets and wherein a portion of each of said plurality of data sets is stored on said further storage means.

6. Apparatus as claimed in Claim 1, wherein the main storage means comprises a tape drive, the first storage means comprises a hard disk drive and the apparatus further comprises a memory and further includes a communications adaptor, wherein the apparatus has a plurality of modes of operation including a first mode of operation in which a portion of a plurality of discrete data sets located on the tape drive is loaded into the memory and in which said portion of each of the discrete data sets has a length at least equal to the delay associated with the tape drive, and a second mode operation, which is entered after the loading of the portion of each of said discrete data sets has been completed and in response to receiving a request for the stored data, in which the portion of the requested video in the memory is transferred in response to the request via the communications adaptor and another portion of each of the discrete data sets is located on the tape drive and is arranged to be transferred to the memory.

7. Apparatus as claimed in Claim 6, wherein the plurality of modes of operation further includes a third mode in which a portion of the data located on the hard disk drive is stored in the memory and wherein the portion of said data has a length equal to at least the delay associated with the hard disk drive, and a fourth mode, which is entered after the third mode of being completed and in response to receiving a request for data stored on the hard disk drive, in which the portion of the requested video in the memory is transferred in response to the request via the communications adaptor while another portion of video is transferred to the memory from the hard disk drive for eventual transfer in response to the request.

8. A method of storing data to be transferred in response to a request for transfer therefrom, comprising the steps of storing said data on main storage means which exhibits a delay before transfer can occur in response to said request and characterized by the step of transferring a portion of said stored data to further storage means which exhibits the delay less than the delay exhibited by the main storage means, and transferring the portion from the further storage means in response to said request while the transfer of the data stored in the main storage means is initiated in response to the request and transferred by way of the further storage means.

9. A method as claimed in Claim 8, wherein the portion of data stored in the further storage means has a length in time at least equal to the delay associated with the main storage means.

10. A method as claimed in Claim 8 or 9, and carried out in accordance with the apparatus as defined in any one of Claims 1-7.
